# FASCICULE DE BREVET EUROPEEN

(11) **EP 2 566 683 B1**
(45) Date de publication et mention de la délivrance du brevet: **18.10.2017**
(21) Numéro de dépôt: 11725131.4
(22) Date de dépôt: 06.05.2011
(51) Int. Cl.: B29C 65/16, B29C 65/78, B60J 5/10

(54) **DISPOSITIF D'ASSEMBLAGE DE DEUX PIECES EN MATERIAUX THERMOPLASTIQUES PAR SOUDAGE LASER PAR TRANSPARENCE ET PROCEDE D'ASSEMBLAGE ASSOCIE**
VORRICHTUNG ZUR MONTAGE ZWEIER TEILE AUS THERMOPLASTISCHEN MATERIALIEN MIT LASERTRANSPARENTEM SCHWEISSEN UND ZUGEHÖRIGES MONTAGEVERFAHREN
DEVICE FOR ASSEMBLING TWO PARTS MADE FROM THERMOPLASTIC MATERIALS BY MEANS OF LASER-TRANSPARENT WELDING AND ASSOCIATED ASSEMBLY METHOD

(30) Priorité: 07.05.2010 FR 1053583
(43) Date de publication de la demande: 13.03.2013
(73) Titulaire: Renault S.A.S., 92100 Boulogne-Billancourt (FR)
(72) Inventeur: KERBIGUET, Jean Gilles, F-78150 Le Chesnay (FR); GUERMEUR, Herve, F-78250 Oinville (FR); TIRADO, Lucio, F-78170 La Celle Saint Cloud (FR)
(86) Numéro de dépôt international: PCT/FR2011/051031
(87) Numéro de publication internationale: WO 2011/138567

(56) Documents cités:
- EP-A1- 1 652 615
- DE-A1- 10 004 538
- DE-A1- 19 924 469
- DE-A1-102007 042 739
- JP-A- 2007 111 927
- US-A1- 2005 167 042
- BOBBYE BAYLIS ET AL: "Pyrometer measurements during laser welding of thermoplastic elastomers to polypropylene and of nylon to itself", SOCIETY OF PLASTICS ENGINEERS. ANNUAL TECHNICAL CONFERENCE (ANTEC). PROCEEDINGS, SOCIETY OF PLASTICS ENGINEERS, US, 1 janvier 2003 (2003-01-01), pages 1111-1115, XP002325211, ISSN: 1539-2252

## Description

### Domaine technique de l'invention

L'invention concerne un dispositif, tel que défini par la revendication 1, d'assemblage de deux pièces par soudage laser par transparence, une première pièce supérieure transparente étant positionnée sur une seconde pièce inférieure absorbante, l'ensemble des deux pièces étant positionné sur un support pour le soudage laser, le dispositif d'assemblage comportant un moyen de projection d'un faisceau laser sur la surface supérieure de ladite pièce supérieure et des moyens d'assemblage aptes à maintenir l'ensemble des deux pièces assemblées entre elles sur le support et comportant au moins :
- des premiers moyens de bridage, destinés à assurer le référencement géométrique de l'ensemble des deux pièces positionné sur ledit support,
- des seconds moyens de bridage, destinés à exercer un effort prédéterminé contre l'ensemble des deux pièces positionné sur ledit support,
- et des premiers moyens de réglage, associés aux dits seconds moyens de bridage.

L'invention concerne également un procédé, tel que défini par la revendication 8, d'assemblage de deux pièces par soudage laser par transparence, une première pièce supérieure transparente étant positionnée sur une seconde pièce inférieure absorbante, les deux pièces étant positionnées sur un support pour le soudage laser et assemblées entre elles sur le support au moyen d'un tel dispositif d'assemblage, le procédé comportant au moins :
- une première étape de référencement géométrique de l'ensemble des deux pièces positionné sur ledit support par des premiers moyens de bridage,
- une deuxième étape de conformation de l'ensemble des deux pièces positionné sur le support par des seconds moyens de bridage, associés à des premiers moyens de réglage, de sorte à régler un effort prédéterminé exercé par lesdits seconds moyens de bridage contre l'ensemble des deux pièces positionné sur ledit support, et
- une troisième étape de soudage laser par transparence par l'intermédiaire d'un moyen de projection d'un faisceau laser au niveau d'une interface de soudage prédéterminée des deux pièces.

### Etat de la technique

Il est apparu ces dernières années une demande importante de réduction du poids et du coût des pièces, notamment dans le domaine des composants pour l'industrie automobile. Plus particulièrement pour la réalisation d'un véhicule automobile, de nombreuses pièces en tôle sont nécessaires, lesdites pièces en tôle présentant des formes plus ou moins complexes, pour lesquelles il est nécessaire de prévoir des procédés d'assemblage complexes. Ainsi, il a été proposé d'utiliser des pièces en matériaux thermoplastiques, afin de réduire à la fois le poids de la pièce, mais aussi son coût. En parallèle, il a été proposé des améliorations aux procédés d'assemblage existants, en vu des les adapter à l'assemblage de pièces en matériaux thermoplastiques.

C'est le cas notamment des documents DE 199 24 469, US 2005/167042 et EP 1 652 615, qui décrivent des installations comprenant des dispositifs d'assemblage de pièces en matériaux thermoplastiques. Toutefois, de telles installations sont très lourdes en termes de machineries, complexes à utiliser et mettant en oeuvre des procédés d'assemblage très peu flexibles.

Un autre type de procédé d'assemblage laser est également décrit dans le document EP 1 777 057. Celui-ci décrit notamment une première pièce supérieure transparente à un faisceau laser, projeté sur la surface supérieure de la pièce, laquelle est positionnée sur une seconde pièce inférieure absorbante, ou opaque à la longueur d'onde particulière du faisceau laser projeté. Les deux pièces sont assemblées entre elles et positionnées sur un support pour le soudage laser. Une mise en pression contrôlée des deux pièces est également prévue tout le long d'une interface de soudage pendant que le rayon laser parcourt cette interface. La température de la pièce inférieure absorbante va alors s'élever jusqu'à la fusion et va fondre par diffusion le matériau transparent de la pièce supérieure, créant une soudure permanente lors de la phase de refroidissement.

Toutefois, avec un tel procédé d'assemblage, un problème rencontré réside dans la nature des pièces à assembler, l'une étant souvent une pièce d'aspect, par exemple du type garniture intérieure de porte d'un véhicule automobile, qu'il ne faut absolument pas dégrader visuellement. Plus particulièrement, le chargement et l'empilage des pièces sur le support du dispositif d'assemblage consistent à placer d'abord la pièce absorbante, ou souple, et ensuite la pièce transparente, ou rigide. Or, avec un dispositif d'assemblage classique, comme décrit notamment dans le document EP 1 777 057, le référencement géométrique des pièces est alors réalisé du côté de la pièce rigide, à savoir la pièce d'aspect dans le cas décrit ci-dessus. Il en résulte notamment un risque majeur de marquage de la pièce, générant des défauts en termes de qualité perçue.

Par ailleurs, il ressort également des problèmes en termes de fiabilité et de facilité de montage, de bridage et de fixation des pièces ensembles. De même, la mise en pression contrôlée décrite plus particulièrement dans le document EP 1 777 057 n'est pas optimale, car la pression s'ajuste pendant le soudage laser, ce qui complexifie et augmente le prix considérablement d'un tel dispositif d'assemblage.

### Objet de l'invention

L'invention a pour but de remédier à l'ensemble des inconvénients précités et a pour objet la réalisation d'un dispositif d'assemblage de deux pièces, plus particulièrement de deux pièces en matériaux thermoplastiques, qui soit simple, efficace et rapide, qui garantisse une qualité de soudure optimale, tout en permettant une grande flexibilité selon les pièces à assembler. Lesdits premiers moyens de réglage comportent une pluralité d'organes mobiles, aptes à être actionnés indépendamment les uns les autres au niveau d'une interface de soudage prédéterminée des deux pièces et destinés à régler ledit effort prédéterminé au niveau de ladite interface de soudage.

Un tel dispositif d'assemblage, avec des moyens de réglage spécifiques pour le référencement des pièces et pour l'application d'effort, permet notamment d'optimiser l'assemblage des deux pièces ensemble et d'assurer un accostage parfait des deux pièces au niveau de l'interface de soudage.

D'autres avantages et caractéristiques de l'invention peuvent être considérés isolément ou en combinaison :
Lesdits premiers moyens de réglage peuvent être actionnables manuellement ou automatiquement.

Le faisceau laser étant projeté selon un axe sensiblement perpendiculaire à ladite interface de soudage, lesdits premiers moyens de réglage peuvent être actionnés selon une direction parallèle audit axe de projection du faisceau laser.

De tels moyens de réglage complètement indépendants les uns des autres peuvent ainsi être réglés selon trois dimensions le long de l'interface de soudage permettant notamment une distribution des efforts et une mise en contrainte totalement optimisées selon la conformation et le type des pièces à assembler.

Lesdits premiers moyens de bridage peuvent comporter des seconds moyens de réglage, destinés à ajuster ledit référencement géométrique de l'ensemble des deux pièces positionné sur ledit support.

De tels moyens de réglages complémentaires permettent notamment d'optimiser le référencement géométrique des deux pièces pour assurer une bonne mise en géométrie et un bon accostage des pièces au niveau de l'interface de soudage.

Ladite pièce supérieure transparente étant une pièce rigide et ladite pièce inférieure absorbante étant une pièce souple, lesdits premiers moyens de bridage peuvent venir en appui contre la surface supérieure de ladite pièce supérieure et lesdits seconds moyens de bridage peuvent venir en appui contre la surface inférieure de ladite pièce inférieure.

De tels moyens de bridage permettent notamment d'effectuer le référencement du côté pièce rigide et la mise en contrainte, à savoir l'application d'efforts prédéterminés, du côté pièce d'aspect, ce qui n'engendre notamment aucun défaut de marquage, dans le cas de pièces à assembler du type pièces d'aspect.

Le dispositif d'assemblage peut comporter un moyen d'apport d'air, destiné à projeter un flux d'air au niveau de la surface supérieure de ladite pièce supérieure simultanément au faisceau laser.

Ledit moyen de projection du faisceau laser étant muni d'un cône de projection, ledit moyen d'apport d'air peut être relié audit cône de projection, lequel joue le rôle d'un cône de canalisation du flux d'air, de sorte à obtenir un flux d'air maîtrisé au niveau de la surface supérieure de ladite pièce supérieure.

Un tel moyen d'apport d'air maîtrisé permet d'éviter un phénomène de carbonisation (comme décrit ci-après) à la surface des pièces assemblées.

L'invention a également pour objet la réalisation d'un procédé d'assemblage par soudage laser par transparence, qui permette de souder de façon simple, rapide et efficace deux pièces en matériaux thermoplastiques, en évitant tous les problèmes et inconvénients cités ci-dessus. Lesdits premiers moyens de réglage comportent une pluralité d'organes mobiles; la deuxième étape de conformation comporte une étape d'actionnement des organes mobiles indépendamment les uns les autres, de sorte à régler ledit effort prédéterminé au niveau de ladite interface de soudage.

Un tel procédé de soudage laser permet donc de façon simple et rapide d'assembler deux pièces en matériaux thermoplastiques.

D'autres avantages et caractéristiques de l'invention peuvent être considérés isolément ou en combinaison, notamment le procédé d'assemblage peut comporter simultanément à ladite troisième étape de soudage laser, une étape de projection d'un flux d'air maîtrisé au niveau de la surface supérieure de ladite pièce supérieure.

Une telle étape de projection d'air simultanément à l'étape de soudage laser permet notamment un assemblage optimal sans dégradation de la surface des pièces assemblées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente schématiquement une vue partielle d'un mode particulier de réalisation d'un dispositif d'assemblage selon l'invention.
La figure 2 représente schématiquement une vue partielle d'une variante de réalisation d'un dispositif d'assemblage selon l'invention.
La figure 3 représente schématiquement une vue agrandie partielle selon la coupe A-A du dispositif d'assemblage selon les figures 1 et 2.
Les figures 4 et 5 représentent, respectivement, une photo en perspective partielle et une vue en perspective d'un exemple particulier d'application du dispositif d'assemblage selon les figures 1 à 3, pour des pièces en matériaux thermoplastiques du type porte de coffre pour véhicule automobile.
La figure 6 représente une vue en perspective partielle d'un détail des moyens de réglage des moyens de bridage du dispositif d'assemblage selon les figure 4 et 5.

### Description de modes particuliers de réalisation

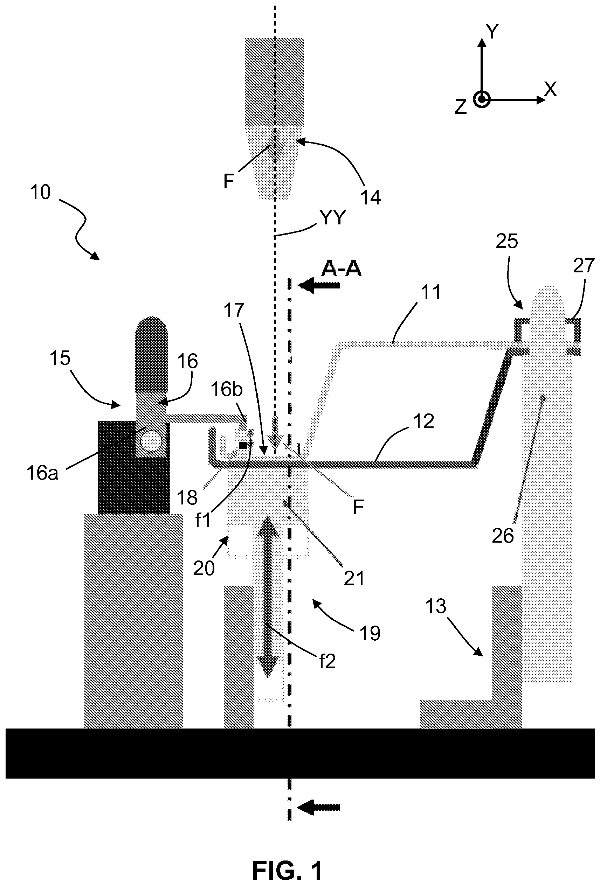

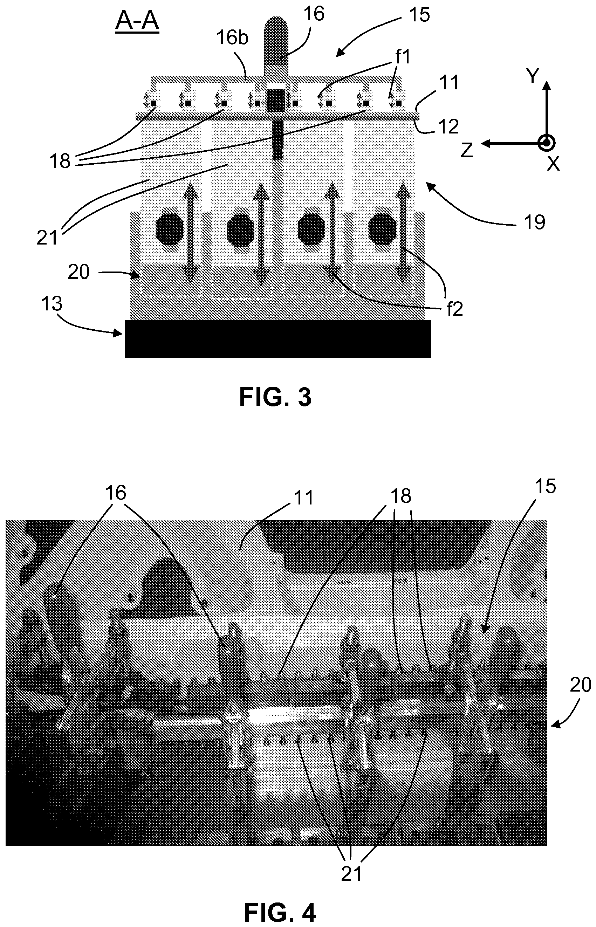

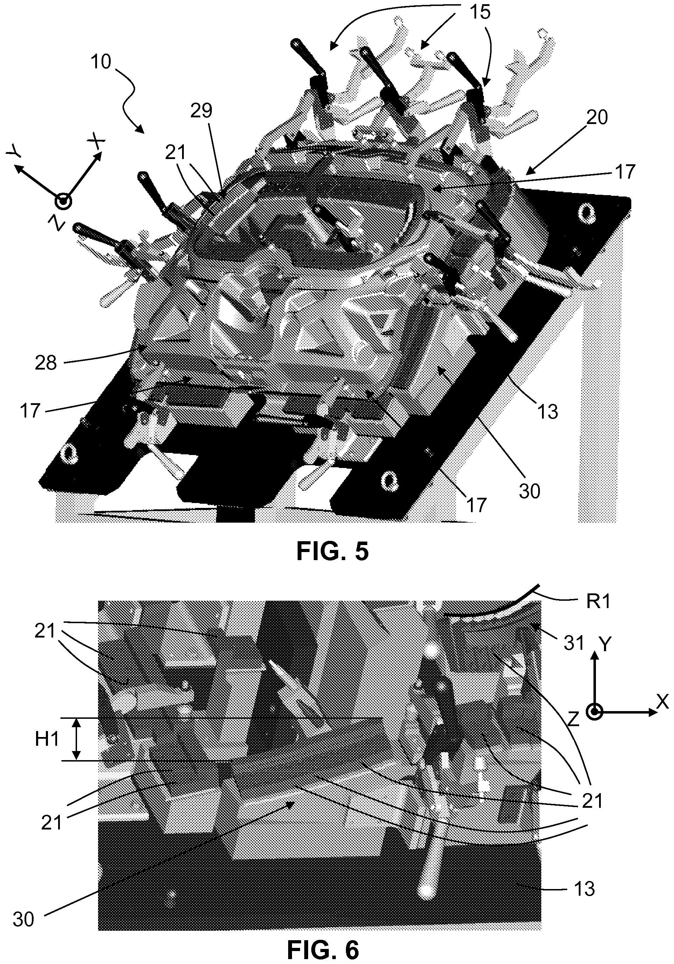

En référence aux figures 1 à 6, le dispositif d'assemblage 10 selon l'invention est destiné à l'assemblage de deux pièces en matériaux thermoplastiques par soudage laser par transparence. Le dispositif d'assemblage 10 selon l'invention prend en compte plus particulièrement les contraintes qui sont liées au matériau des pièces à assembler et qui sont liées au procédé de soudage laser associé, à savoir les matériaux et leur différence de rigidité, le fait que l'une des deux pièces soit, par exemple, une pièce d'aspect et que l'accostage soit nécessairement parfait à l'interface de soudage des deux pièces. Plus particulièrement, comme représenté sur les figures 4 et 5, le dispositif d'assemblage 10 selon l'invention est, par exemple, destiné à assembler une porte de coffre, ou hayon, d'un véhicule automobile.

Dans la description qui va suivre, on utilisera à titre non limitatif les expressions telles que «arrière» et « avant », « gauche » et «droite», «supérieur» et «inférieur» et les orientations «longitudinale», « transversale » et « verticale » en référence au trièdre de référence X, Y, Z, représenté aux figures et aux définitions données dans la description.

Dans le premier mode de réalisation représenté sur la figure 1, le dispositif d'assemblage 10 selon l'invention est destiné à l'assemblage de deux pièces 11, 12 en matériaux thermoplastiques. Plus particulièrement, les deux pièces 11, 12 sont positionnées sur un support 13, réglé de sorte à recevoir de façon stable les deux pièces 11, 12 dans le respect de la géométrie souhaitée pour les pièces 11, 12. Le dispositif d'assemblage 10 comporte un moyen de projection 14 d'un faisceau laser, destiné à projeter un faisceau laser F sur l'assemblage des deux pièces 11, 12. Plus particulièrement, la pièce supérieure 11 transparente au faisceau laser F est, de préférence, une pièce rigide et la pièce inférieure 12 absorbante est, de préférence, une pièce souple. L'interface entre la pièce inférieure 12 et la pièce supérieure 11 est destinée à être chauffée par le faisceau laser F jusqu'à la fusion de la pièce inférieure 12 absorbante, afin de fondre par diffusion le matériau transparent de la pièce supérieure 11, créant ainsi une soudure permanente lors de la phase de refroidissement.

Par ailleurs, le dispositif d'assemblage 10 comporte des premiers moyens de bridage 15 supérieurs, c'est-à-dire aptes à venir en appui contre la surface supérieure de la pièce supérieure 11, comportant une pluralité de pinces 16 articulées réparties de façon prédéterminée tout le long du périmètre des pièces 11, 12 à assembler (figures 3, 4 et 5), plus précisément tout le long d'une interface de soudage 17 prédéterminée, ou piste de soudage, au niveau de laquelle s'effectue le soudage des deux pièces 11, 12.

Par interface de soudage 17, ou piste de soudage, il faut comprendre ici l'interface de contact entre les deux pièces 11, 12, à savoir l'ensemble des zones correspondant aux parties accostées des deux pièces 11, 12 destinées à être soudées. C'est-à-dire, dans le cas de pièces complexes du type panneau de porte ou de coffre d'un véhicule automobile (figures 4 et 5), cela correspond sensiblement aux bords des pièces 11, 12, comme représentées sur les figures 1, 4 et 5, mais également aux parties en contact des deux pièces 11, 12 situées plus vers l'intérieur ou le centre des pièces 11, 12, comme représenté sur la figure 5. De même, l'interface de soudage 17 comporte, de préférence, aucune surépaisseur du type marquage ou défaut de surface et aucune sous-épaisseur, du type résultant des empruntes d'éjecteurs de moules. D'une façon générale, l'interface de soudage 17 entre les pièces 11, 12, à savoir l'ensemble des zones à souder correspondant au passage du faisceau laser, doit être le plus lisse possible, sans défaut de surface ni en creux ni en bosse.

De tels moyens de bridage 15 ont pour fonction principale d'assurer le référencement géométrique de l'ensemble des deux pièces 11, 12 positionnées sur le support 13 du dispositif d'assemblage 10 selon l'invention. Un tel référencement géométrique a notamment pour but de placer les pièces 11, 12 dans une configuration telle qu'elles épousent parfaitement la forme de la pièce de référence, à savoir la pièce rigide, afin de garantir l'accostage et la géométrie souhaitée des deux pièces 11, 12 (figures 4 et 5).

A titre d'exemple, chaque pince 16 est articulée sur le support 13 à une première extrémité 16a et vient en appui à une seconde extrémité 16b sur la surface supérieure de la pièce supérieure 11 rigide (figure 1). De plus, la seconde extrémité 16b de chaque pince 16 est dotée avantageusement de moyens de réglage additionnel, par exemple une touche 18 réglable (figure 1), de sorte à venir en appui sur la surface supérieure de la pièce supérieure 11 et épouser parfaitement la forme de l'ensemble des deux pièces 11, 12 superposées. De telles touches réglables 18 sont actionnées, de préférence, manuellement au moment de l'installation des pièces 11, 12 sur le support 13, mais peuvent également être actionnées automatiquement par tout type de moyen d'actionnement approprié (du type électrique, pneumatique, etc...) associé au dispositif d'assemblage 10 selon l'invention.

Par ailleurs, comme représenté sur les figures 1 et 3, chaque touche réglable 18 est montée à déplacement selon la flèche f1, parallèle à l'axe vertical Y des figures 1 et 3. D'une façon générale, l'extrémité en appui 16b de chaque pince articulée 16 des moyens de bridage 15 supérieurs est en appui perpendiculairement sur la surface supérieure de l'ensemble des pièces 11, 12 assemblées, à savoir dans le sens d'un axe YY de projection du faisceau laser F, lequel est projeté perpendiculairement à l'interface de soudage 17 des pièces 11, 12.

Sur la figure 1, le dispositif d'assemblage 10 comporte également des seconds moyens de bridage 19 inférieurs, c'est-à-dire aptes à venir en appui contre la surface inférieure de la pièce inférieure 12. Les moyens de bridage 19 inférieurs ont pour fonction principale d'exercer un effort, ou force de poussée, prédéterminé contre l'ensemble des deux pièces 11, 12 assemblées sur le support 13, sur tout le périmètre des deux pièces 11, 12 assemblées, plus particulièrement tout le long de l'interface de soudage 17 prédéterminée.

Plus particulièrement, les moyens de bridage 19 comportent des moyens de réglage 20 associés, destinés à optimiser la conformation de la pièce inférieure 12 en ajustant les efforts tout le long de l'interface de soudage 17, notamment en fonction de la géométrie des pièces 11, 12, afin de garantir l'accostage des deux pièces 11, 12 au niveau de l'interface de soudage 17.

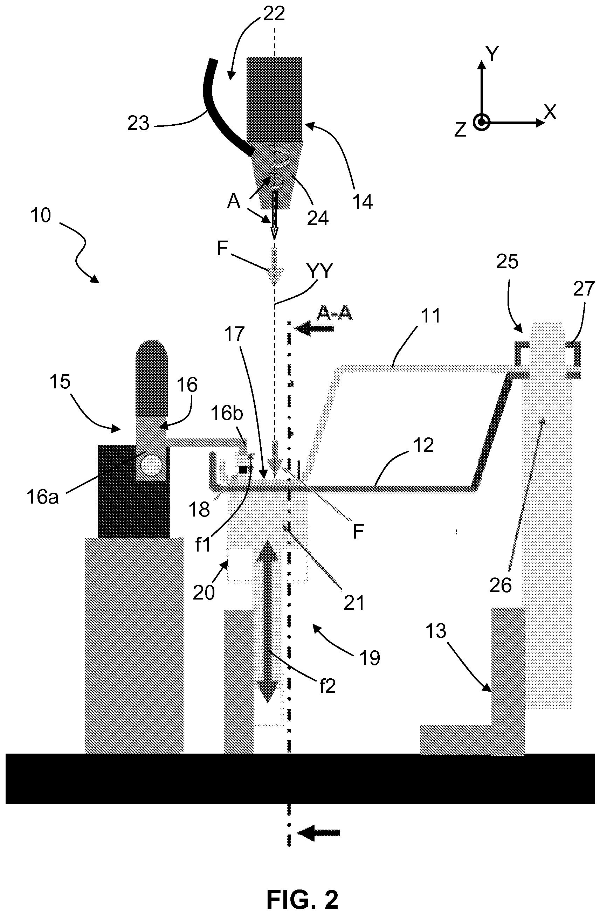

A titre d'exemple, comme représenté sur les figures 1 et 3, les moyens de réglage 20 comportent une pluralité d'organes mobiles 21, par exemple du type vis, touches, doigts, platines, etc., montés à déplacement indépendamment les uns des autres selon la flèche f2, parallèle à l'axe vertical Y des figures 1 et 3. D'une façon générale, chaque organe mobile 21 est monté à déplacement indépendamment des autres et perpendiculairement à la surface inférieure de la pièce inférieure 12, plus particulièrement à l'interface de soudage 17 des deux pièces 11, 12 et donc parallèlement à l'axe YY de projection du faisceau laser F (figures 1 et 2).

Par ailleurs, comme représenté plus particulièrement sur la figure 4, les moyens de réglage 20 peuvent être actionnés manuellement, avec des vis 21 jouant le rôle des organes mobiles, chaque vis 21 étant réglée avant le départ de l'étape de soudage laser du procédé d'assemblage associé, ou peuvent être actionnés automatiquement par tout type de moyen d'actionnement approprié (du type électrique, pneumatique, etc...) associé au dispositif d'assemblage 10 selon l'invention.

Par ailleurs, comme représenté plus particulièrement sur les figures 5 et 6, les moyens de réglage 20 des organes mobiles 21 sont agencés sur le support 13 de sorte à pouvoir être orientés selon les trois dimensions représentées schématiquement par le trièdre de référence X, Y, Z. Comme indiqué précédemment, l'interface de soudage 17 des pièces 11, 12 destinées à être assemblées, par exemple un élément 28 d'un véhicule automobile du type porte de coffre (figure 5), comprend non seulement le bord des pièces 11, 12, mais également des portions de pièces situées plus vers le centre. Notamment, comme représenté sur la figure 5, les pièces 11, 12 à assembler ne sont pas des plaques planes uniformes mais des pièces préformées, dont l'interface de soudage 17 comprend des portions à différentes hauteurs selon le trièdre X, Y, Z.

Sur la figure 5, le support 13 est ainsi équipé d'une multitude d'organes mobiles 21 répartis tout le long de l'interface de soudage 17 et dont la position est réglée selon la forme des pièces 11, 12. A titre d'exemple, comme représenté sur les figures 5 et 6, les moyens de réglage 20 comportent, par exemple, une première barrette 29 d'organes mobiles 21, juxtaposés les uns à côté des autres mais décalés en hauteur et ne présentant pas la même longueur, de sorte à épouser le contour des pièces (correspondant ici sensiblement à l'emplacement de la lunette arrière de la porte de coffre). Encore à titre d'exemple, les moyens de réglage 20 comportent une seconde barrette 30, associée au bord des pièces 11, 12, comportant une pluralité d'organes mobiles 21 successifs, décalés en hauteur de sorte à former une pente de hauteur H1 (figure 6).

Sur la figure 6, illustrant une vue partielle du dispositif d'assemblage représenté sur la figure 5, les moyens de réglage 20 comportent également une troisième barrette 31 formée d'une pluralité d'organes mobiles 21 agencés de sorte à former un arc de cercle avec un rayon de courbure R1, correspondant à une conformation particulière des pièces 11, 12 à assembler.

D'une façon générale, les moyens de réglage 20 présentent ainsi une multitude d'organes mobiles 21 agencés de façon complètement indépendante les uns des autres et pouvant se déplacer selon les trois axes du trièdre X, Y et Z, de sorte à s'adapter parfaitement à la forme des pièces 11, 12 à assembler. De tels moyens de réglage permettent ainsi une grande flexibilité selon les pièces à assembler, uniquement le réglage des organes mobiles étant nécessaire en cas de changement des pièces 11, 12 à assembler ou en cas d'ajustement des efforts à effectuer.

Dans une variante de réalisation particulièrement avantageuse représentée sur la figure 2, le dispositif d'assemblage 10 selon l'invention comporte un moyen de projection d'air 22, associé de préférence au moyen de projection 14 du faisceau laser F et destiné à projeter un flux d'air A simultanément avec le faisceau laser F. Un tel apport d'air, projeté parallèlement au faisceau laser F et selon la même axe de référence YY (figures 1 et 2), a pour fonction principale d'empêcher un phénomène de carbonisation qui peut apparaître à la surface supérieure de la pièce supérieure 11.

En effet, un phénomène de carbonisation peut apparaître à la surface des pièces soudées, en cas de mauvaise soudure, à savoir quand la pièce supérieure 11 a trop chauffée et carbonise, rendant la pièce supérieure 11 absorbante. Dans ce cas, il n'y a pas de soudage à l'interface de soudage 17, car la pièce supérieure 11 n'est plus transparente. Le flux d'air A, dont la puissance de projection dépend ainsi des caractéristiques plus ou moins transparentes de la pièce supérieure 11, permet ainsi d'empêcher complètement ce phénomène de carbonisation, afin d'assurer une qualité de soudure optimale.

A titre d'exemple, comme représenté plus particulièrement sur la figure 2, le moyen d'apport du flux d'air 22 comporte un tuyau 23 d'amenée d'air, relié à une source d'air (non représentée) et à un cône 24 de canalisation du flux d'air, lequel correspond à une extrémité du moyen de projection 14 du faisceau laser F. Un tel cône 24 de canalisation du flux d'air A, qui joue également le rôle de cône de projection du faisceau laser F, permet notamment, pendant le procédé de soudage laser associé, d'obtenir un flux d'air A maîtrisé et calculé pour éviter le phénomène de carbonisation à la surface des pièces 11, 12, comme décrit ci-dessus.

Quel que soit le mode de réalisation du dispositif d'assemblage 10 selon l'invention, représenté sur les figures 1 à 3, les deux pièces 11, 12 à assembler sont en matériaux thermoplastiques, par exemple du polypropylène. De même, les pièces 11, 12 à assembler peuvent être réalisées en tout matériau thermoplastique, par exemple du polyamide, tant que le matériau choisi présente des caractéristiques optimales en termes de solidité, de coût, de recyclage et de bonne aptitude au soudage laser, à savoir transparence, etc. Plus particulièrement, la pièce supérieure 11 transparente peut être une pièce en matériaux polymères chargée de fibres de verres.

D'une façon générale, le dispositif d'assemblage 10 selon l'invention consiste à utiliser, d'une part, des premiers moyens de bridage associés spécifiquement à la pièce rigide, que ce soit la pièce supérieure 11, comme pour les exemples de réalisation représentés sur les figures 1 et 2, ou que ce soit la pièce inférieure 12, dans une variante de réalisation non représentée, et ayant pour fonction principale le référencement géométrique des deux pièces 11, 12 assemblées. D'autre part, le dispositif d'assemblage 10 selon l'invention consiste à utiliser des seconds moyens de bridage associés spécifiquement à la pièce souple, que ce soit la pièce inférieure 12, comme pour les exemples de réalisation représentés sur les figures 1 et 2, ou que ce soit la pièce supérieure 11, dans une variante de réalisation non représentée, et ayant pour fonction principale la conformation de la pièce souple par l'application et le réglage d'efforts prédéterminés.

Par ailleurs, quel que soit le mode de réalisation du dispositif d'assemblage 10 selon l'invention, celui-ci comporte également des moyens de bridage minimal 25 (figures 1 et 2), ou moyens de mise en référence géométrique, destinés à bloquer les pièces 11, 12 sur le support 13, pendant l'étape de soudage. A titre d'exemple, le support 13 comporte un pilier 26, ou pilote de référence ou standard de pilotage, sur lequel sont montées les pièces 11, 12, et des pinces de verrouillage 27, associées au pilier 26 et destinées à maintenir l'ensemble des pièces 11, 12 assemblées sur le support 13. De tels moyens de bridage minimal 25 permettent notamment de maintenir globalement l'ensemble des deux pièces 11, 12 assemblées sur le support 13 et éviter, par exemple, tout soulèvement ou décalage d'un côté des deux pièces 11, 12 assemblées, lors du soudage laser à l'opposé de ce côté.

Quel que soit le mode de réalisation du dispositif d'assemblage 10 selon les figures 1 à 6, celui-ci a donc pour avantage principal d'assurer un référencement géométrique et une conformation des deux pièces assemblées simples, efficaces et rapides, tout en garantissant un accostage optimal des pièces au niveau de l'interface de soudage. Notamment, un tel référencement géométrique (transfert de référentiel géométrique) du côté pièce rigide permet notamment d'avoir une pièce supérieure qui ne sert qu'à mettre en référence, afin que la pièce rigide soit la référence géométrique, et que l'on puisse conformer la pièce inférieure souple sur la pièce supérieure rigide pour limiter les efforts de bridage d'une part et assurer un accostage parfait d'autre part, indispensable pour effectuer une bonne soudure laser.

Par ailleurs, de tels moyens de réglage composés d'une multitude d'organes mobiles indépendants offrent une vraie flexibilité au dispositif d'assemblage, qui peut ainsi s'adapter facilement et rapidement à d'autres formes de pièces à assembler.

Un procédé d'assemblage de deux pièces 11, 12 en matériaux thermoplastiques par soudage laser par transparence au moyen d'un dispositif d'assemblage comme décrit ci-dessus va maintenant être décrit en référence aux figures 1 à 6.

Le procédé d'assemblage consiste au préalable à positionner d'abord la pièce inférieure 12 sur le support 13, puis la pièce supérieure 11 sur la pièce inférieure 12. Afin d'assurer un positionnement et un maintien corrects de l'ensemble des deux pièces 11, 12 sur le support 13, une étape de bridage minimal est réalisée. Par exemple, des moyens de bridage minimal 25 (figures 1 et 2) peuvent être positionnés sur l'ensemble des pièces 11, 12, afin d'éviter tout mouvement intempestif des pièces 11, 12 positionnées sur le support 13.

Puis, le procédé d'assemblage selon l'invention comporte une première étape de référencement géométrique de l'ensemble des deux pièces 11, 12 positionné sur le support 13 par les premiers moyens de bridage 15 supérieurs. Plus particulièrement, les pinces articulées 16 sont toutes placées en appui contre la surface supérieure de la pièce supérieure 11, tout le long de l'interface de soudage 17 des deux pièces 11, 12 assemblées.

Puis, le procédé d'assemblage selon l'invention comporte une deuxième étape de conformation, ou mise en conformité, de l'ensemble des deux pièces 11, 12 positionné sur le support 13 par les seconds moyens de bridage 19 inférieurs. Plus particulièrement, l'ensemble des organes mobiles 21 sont réglés indépendamment les uns des autres, de sorte que chaque organe mobile 21 exerce un effort prédéterminé contre la surface inférieure de la pièce inférieure 12, au niveau de l'interface de soudage 17 des deux pièces 11, 12 assemblées.

Puis, une fois tous les réglages effectués, le procédé d'assemblage selon l'invention comporte une étape de soudage laser par transparence par l'intermédiaire du moyen de projection 14 du faisceau laser F, qui projette donc le faisceau laser F tout le long de l'interface de soudage 17.

Par ailleurs, le procédé d'assemblage selon l'invention comporte avantageusement une étape de projection d'un flux d'air A maîtrisé, simultanément à l'étape de soudage laser, au niveau de la surface supérieure de la pièce supérieure 11. Un tel apport d'air permet notamment d'éviter tout phénomène de carbonisation de surface des pièces pendant l'étape de soudage, comme décrit précédemment.

Un tel procédé d'assemblage par soudage laser par transparence de deux pièces en matériaux thermoplastiques permet donc de réaliser un assemblage de façon simple, rapide et efficace, pour des pièces en matériaux moins chers et aussi efficaces que des matériaux classiques. Par ailleurs, une telle étape de réglage des efforts prédéterminés appliqués au niveau de l'interface de soudage, avant l'étape de soudage laser, permet notamment d'éviter des ajustements de cette pression en continu lors du soudage, de tels ajustements étant souvent sources de complexité, de ralentissement et de coûts élevés du procédé.

L'invention n'est pas limitée aux différents modes de réalisation du dispositif d'assemblage et du procédé d'assemblage associé décrits ci-dessus. Notamment, le dispositif d'assemblage peut comporter tout type de premiers moyens de bridage 15, tant qu'ils permettent un référencement géométrique optimal, et peut comporter tout type de seconds moyens de bridage 19 et de moyens de réglage 20 associés, tant qu'ils permettent une mise en pression optimale et un accostage parfait des deux pièces 11, 12 au niveau de l'interface de soudage 17. De même, le nombre, la forme et l'orientation des éléments constitutifs des premiers moyens de bridage 15, des seconds moyens de bridage 19 et des moyens de réglage 20 associés, peuvent être différents, tant que leur orientation est sensiblement dans le sens de projection YY du faisceau laser F, perpendiculairement à l'interface de soudage 17, et tant qu'ils permettent de régler l'effort prédéterminé selon les trois directions du trièdre X, Y, Z.

De même, le dispositif d'assemblage peut comporter tout type de moyen de projection d'air 22, tant qu'il permet un apport d'air maîtrisé au niveau de la surface supérieure de la pièce supérieure 11, et tout type de moyen de projection 14 d'un faisceau laser F.

## Revendications

1. Dispositif d'assemblage (10) de deux pièces par soudage laser par transparence, une première pièce supérieure (11) transparente étant positionnée sur une seconde pièce inférieure (12) absorbante, l'ensemble des deux pièces (11, 12) étant positionné sur un support (13) pour le soudage laser, le dispositif d'assemblage (10) comportant un moyen de projection (14) d'un faisceau laser (F) sur la surface supérieure de ladite pièce supérieure (11) et des moyens d'assemblage aptes à maintenir l'ensemble des deux pièces (11, 12) assemblées entre elles sur le support (13) et comportant au moins :
- des premiers moyens de bridage (15) supérieurs, c'est-à-dire aptes à venir en appui contre la surface supérieure de la pièce supérieure (11), destinés à assurer le référencement géométrique de l'ensemble des deux pièces (11, 12) positionné sur ledit support (13),
- des seconds moyens de bridage (19) inférieurs, c'est-à-dire aptes à venir en appui contre la surface inférieure de la pièce inférieure (12), destinés à exercer un effort prédéterminé (f2) contre l'ensemble des deux pièces (11, 12) positionné sur ledit support (13),
- et des premiers moyens de réglage (20), associés aux dits seconds moyens de bridage (19), comportant une pluralité d'organes mobiles (21), aptes à être actionnés indépendamment les uns les autres au niveau d'une interface de soudage (17) prédéterminée des deux pièces (11, 12) et destinés à régler ledit effort prédéterminé (f2) au niveau de ladite interface de soudage (17),
**dispositif d'assemblage** dans lequel lesdits premiers moyens de bridage (15) comportent une pluralité de pinces (16) articulées réparties tout le long de l'interface de soudage (17).

2. Dispositif d'assemblage (10) selon la revendication précédente, **caractérisé en ce que** lesdits premiers moyens de réglage (20) sont actionnables manuellement ou automatiquement.

3. Dispositif d'assemblage (10) selon l'une des revendications précédentes, **caractérisé en ce que,** le faisceau laser (F) étant projeté selon un axe (YY) sensiblement perpendiculaire à ladite interface de soudage (17), lesdits premiers moyens de réglage (20) sont actionnés selon une direction parallèle audit axe (YY) de projection du faisceau laser (F).

4. Dispositif d'assemblage (10) selon l'une quelconque des revendications précédentes, **caractérisé en ce que** lesdits premiers moyens de bridage (15) comportent une pluralité de seconds moyens de réglage (18), destinés à ajuster ledit référencement géométrique de l'ensemble des deux pièces (11, 12) positionné sur ledit support (13).

5. Dispositif d'assemblage (10) selon l'une quelconque des revendications précédentes, **caractérisé en ce que,** ladite pièce supérieure (11) transparente étant une pièce rigide et ladite pièce inférieure (12) absorbante étant une pièce souple, lesdits premiers moyens de bridage (15) sont aptes à venir en appui contre la surface supérieure de ladite pièce supérieure (11) et lesdits seconds moyens de bridage (19) sont aptes à venir en appui contre la surface inférieure de ladite pièce inférieure (12).

6. Dispositif d'assemblage (10) selon l'une quelconque des revendications précédentes, **caractérisé en ce qu'**il comporte un moyen d'apport d'air (22), destiné à projeter un flux d'air (A) au niveau de la surface supérieure de ladite pièce supérieure (11) simultanément au faisceau laser (F).

7. Dispositif d'assemblage (10) selon la revendication précédente, **caractérisé en ce que,** ledit moyen de projection (14) du faisceau laser (F) étant muni d'un cône (24) de projection, ledit moyen d'apport d'air (22) est relié audit cône (19) de projection, lequel joue le rôle d'un cône de canalisation du flux d'air (A), de sorte à obtenir un flux d'air (A) maîtrisé au niveau de la surface supérieure de ladite pièce supérieure (11).

8. Procédé d'assemblage de deux pièces par soudage laser par transparence, une première pièce supérieure (11) transparente étant positionnée sur une seconde pièce inférieure (12) absorbante, les deux pièces (11, 12) étant positionnées sur un support (13) pour le soudage laser et assemblées entre elles sur le support (13) au moyen d'un dispositif d'assemblage (10) selon l'une quelconque des revendications précédentes, le procédé comportant au moins :
- une première étape de référencement géométrique de l'ensemble des deux pièces (11, 12) positionné sur ledit support (13) par des premiers moyens de bridage (15) supérieurs, c'est-à-dire aptes à venir en appui contre la surface supérieure de la pièce supérieure (11),
- une deuxième étape de conformation de l'ensemble des deux pièces (11, 12) positionné sur le support (13) par des seconds moyens de bridage (19) inférieurs, c'est-à-dire aptes à venir en appui contre la surface inférieure de la pièce inférieure (12), associés à des premiers moyens de réglage (20), de sorte à régler un effort (f2) prédéterminé exercé par lesdits seconds moyens de bridage (19) contre l'ensemble des deux pièces (11, 12) positionné sur ledit support (13),
- une troisième étape de soudage laser par transparence par l'intermédiaire d'un moyen de projection (14) d'un faisceau laser (F) au niveau d'une interface de soudage (17) prédéterminée des deux pièces (11, 12),
**procédé d'assemblage** dans lequel
lesdits premiers moyens de réglage (20) comportent une pluralité d'organes mobiles (21),
la deuxième étape de conformation comporte une étape d'actionnement des organes mobiles (21) indépendamment les uns les autres, de sorte à régler ledit effort prédéterminé (f2) au niveau de ladite interface de soudage (17),
dans la première étape de référencement géométrique, une pluralité de pinces (16) articulées sont placées, en appui contre la surface supérieure de la pièce supérieure (11), tout le long de l'interface de soudage (17) des deux pièces (11, 12) de façon à suivre la forme de l'assemblage au niveau de ladite interface de soudage (17).

9. Procédé d'assemblage selon la revendication précédente, **caractérisé en ce qu'**il comporte simultanément à ladite troisième étape de soudage laser, une étape de projection d'un flux d'air (A) maîtrisé au niveau de la surface supérieure de ladite pièce supérieure (11).

## Patentansprüche

1. Vorrichtung zum Fügen (10) von zwei Teilen durch Laserdurchstrahlschweißen, wobei ein erstes transparentes oberes Teil (11) auf einem zweiten absorbierenden unteren Teil (12) positioniert wird, wobei die Anordnung der beiden Teile (11, 12) auf einem Träger (13) zum Laserschweißen positioniert wird, wobei die Fügevorrichtung (10) ein Projektionsmittel (14) zum Projizieren eines Laserstrahls (F) auf die obere Oberfläche des oberen Teils (11) und Fügemittel, die geeignet sind, die Anordnung der beiden zusammengefügten Teile (11, 12) auf dem Träger (13) zu halten, umfasst, und mindestens umfasst:
- erste obere Spannmittel (15), d. h. Mittel, die geeignet sind, an der oberen Oberfläche des oberen Teils (11) zur Anlage zu kommen, die dazu bestimmt sind, die geometrische Referenzierung der Anordnung der beiden Teile (11, 12), die auf dem Träger (13) positioniert ist, sicherzustellen,
- zweite untere Spannmittel (19), d. h. Mittel, die geeignet sind, an der unteren Oberfläche des unteren Teils (12) zur Anlage zu kommen, die dazu bestimmt sind, eine vorgegebene Kraft (f2) gegen die Anordnung der beiden Teile (11, 12), die auf dem Träger (13) positioniert ist, auszuüben,
- und erste Einstellmittel (20), die den zweiten Spannmitteln (19) zugeordnet sind und eine Mehrzahl von beweglichen Organen (21) umfassen, die geeignet sind, unabhängig voneinander an einer vorgegebenen Schweißgrenzfläche (17) der beiden Teile (11, 12) betätigt zu werden, und dazu bestimmt sind, die vorgegebene Kraft (f2) an der Schweißgrenzfläche (17) einzustellen,
wobei in der Fügevorrichtung die ersten Spannmittel (15) eine Mehrzahl von gelenkigen Zangen (16) umfassen, die entlang der gesamten Schweißgrenzfläche (17) verteilt sind.

2. Fügevorrichtung (10) nach dem vorhergehenden Anspruch, **dadurch gekennzeichnet, dass** die ersten Einstellmittel (20) manuell oder automatisch betätigbar sind.

3. Fügevorrichtung (10) nach einem der vorhergehenden Ansprüche, **dadurch gekennzeichnet, dass**, wenn der Laserstrahl (F) entlang einer Achse (YY) projiziert wird, die annähernd senkrecht zur Schweißgrenzfläche (17) verläuft, die ersten Einstellmittel (20) entlang einer parallel zur Projektionsachse (YY) des Laserstrahls (F) verlaufenden Richtung betätigt werden.

4. Fügevorrichtung (10) nach einem beliebigen der vorhergehenden Ansprüche, **dadurch gekennzeichnet, dass** die ersten Spannmittel (15) eine Mehrzahl von zweiten Einstellmitteln (18) umfassen, die dazu bestimmt sind, die geometrische Referenzierung der Anordnung der beiden Teile (11, 12), die auf dem Träger (13) positioniert ist, zu justieren.

5. Fügevorrichtung (10) nach einem der vorhergehenden Ansprüche, **dadurch gekennzeichnet, dass**, wenn das transparente obere Teil (11) ein starres Teil ist und das absorbierende untere Teil (12) ein flexibles Teil ist, die ersten Spannmittel (15) geeignet sind, an der oberen Oberfläche des oberen Teils (11) zur Anlage zu kommen, und die zweiten Spannmittel (19) geeignet sind, an der unteren Oberfläche des unteren Teils (12) zur Anlage zu kommen.

6. Fügevorrichtung (10) nach einem der vorhergehenden Ansprüche, **dadurch gekennzeichnet, dass** sie ein Luftzuführmittel (22) umfasst, das dazu bestimmt ist, gleichzeitig mit dem Laserstrahl (F) einen Luftstrom (A) auf die obere Oberfläche des oberen Teils (11) zu projizieren.

7. Fügevorrichtung (10) nach dem vorhergehenden Anspruch, **dadurch gekennzeichnet, dass**, wenn das Projektionsmittel (14) des Laserstrahls (F) mit einem Projektionskonus (24) versehen ist, das Luftzuführmittel (22) mit dem Projektionskonus (19) verbunden ist, der die Rolle eines Konus zur Kanalisation des Luftstroms (A) spielt, so dass ein kontrollierter Luftstrom (A) an der oberen Oberfläche des oberen Teils (11) erhalten wird.

8. Verfahren zum Fügen von zwei Teilen durch Laserdurchstrahlschweißen, wobei ein erstes transparentes oberes Teil (11) auf einem zweiten absorbierenden unteren Teil (12) positioniert wird, wobei die beiden Teile (11, 12) auf einem Träger (13) zum Laserschweißen positioniert werden und auf dem Träger (13) mittels einer Fügevorrichtung (10) nach einem der vorhergehenden Ansprüche zusammengefügt werden, wobei das Verfahren mindestens umfasst:
- einen ersten Schritt zur geometrischen Referenzierung der Anordnung der beiden Teile (11, 12), die auf dem Träger (13) durch erste obere Spannmittel (15) positioniert wird, d. h. durch Mittel, die geeignet sind, an der oberen Oberfläche des oberen Teils (11) zur Anlage zu kommen,
- einen zweiten Schritt zur Formung der Anordnung der beiden Teile (11, 12), die auf dem Träger (13) positioniert ist, durch zweite untere Spannmittel (19), d. h. Mittel, die geeignet sind, an der unteren Oberfläche des unteren Teils (12) zur Anlage zu kommen, die ersten Einstellmitteln (20) zugeordnet sind, so dass eine vorgegebene Kraft (f2) eingestellt wird, die von den zweiten Spannmitteln (19) gegen die Anordnung der beiden Teile (11, 12), die auf dem Träger (13) positioniert ist, ausgeübt wird,
- einen dritten Schritt des Laserdurchstrahlschweißens über ein Projektionsmittel (14) zum Projizieren eines Laserstrahls (F) auf eine vorgegebene Schweißgrenzfläche (17) der beiden Teile (11, 12),
wobei bei dem Fügeverfahren
die ersten Einstellmittel (20) eine Mehrzahl von beweglichen Organen (21) umfassen,
der zweite Schritt zur Formung einen Schritt zur Betätigung der beweglichen Organe (21) unabhängig voneinander umfasst, so dass die vorgegebene Kraft (f2) an der Schweißgrenzfläche (17) eingestellt wird,
im ersten Schritt zur geometrischen Referenzierung eine Mehrzahl von gelenkigen Zangen (16) an der oberen Oberfläche des oberen Teils (11) über die gesamte Länge der Schweißgrenzfläche (17) der beiden Teile (11, 12) anliegend platziert wird, so dass der Fügeform an der Schweißgrenzfläche (17) gefolgt wird.

9. Fügeverfahren nach dem vorhergehenden Anspruch, **dadurch gekennzeichnet, dass** es gleichzeitig zu dem dritten Schritt des Laserschweißens einen Schritt zum Projizieren eines kontrollierten Luftstroms (A) auf die obere Oberfläche des oberen Teils (11) umfasst.

## Claims

1. Device (10) for assembling two parts by laser transmission welding, a first transparent top part (11) being positioned on a second absorbing bottom part (12), the assembly of the two parts (11, 12) being positioned on a support (13) for the laser welding, the assembly device (10) comprising a means (14) for projecting a laser beam (F) onto the top surface of said top part (11) and assembly means capable of keeping the assembly of the two parts (11, 12) assembled together on the support (13) and comprising at least:
- first upper clamping means (15), that is to say capable of coming to bear against the top surface of the top part (11), intended to ensure the geometrical referencing of the assembly of the two parts (11, 12) positioned on said support (13),
- second lower clamping means (19), that is to say capable of coming to bear against the bottom surface of the bottom part (12), intended to exert a predetermined force (f2) against the assembly of the two parts (11, 12) positioned on said support (13),
- and first adjustment means (20), associated with said second clamping means (19), comprising a plurality of movable members (21), capable of being actuated independently of one another at a predetermined welding interface (17) of the two parts (11, 12) and intended to adjust said predetermined force (f2) at said welding interface (17),
**assembly device** in which said first clamping means (15) comprise a plurality of articulated clamps (16) distributed all along the welding interface (17).

2. Assembly device (10) according to the preceding claim, **characterized in that** said first adjustment means (20) can be actuated manually or automatically.

3. Assembly device (10) according to either of the preceding claims, **characterized in that,** the laser beam (F) being projected on an axis (YY) substantially at right angles to said welding interface (17), said first adjustment means (20) are actuated in a direction parallel to said axis (YY) of projection of the laser beam (F).

4. Assembly device (10) according to any one of the preceding claims, **characterized in that** said first clamping means (15) comprise a plurality of second adjustment means (18), intended to adjust said geometrical referencing of the assembly of the two parts (11, 12) positioned on said support (13).

5. Assembly device (10) according to any one of the preceding claims, **characterized in that,** said transparent top part (11) being a rigid part and said absorbing bottom part (12) being a flexible part, said first clamping means (15) are capable of bearing against the top surface of said top part (11) and said second clamping means (19) are capable of bearing against the bottom surface of said bottom part (12).

6. Assembly device (10) according to any one of the preceding claims, **characterized in that** it comprises an air input means (22), intended to project an air stream (A) onto the top surface of said top part (11) simultaneously with the laser beam (F).

7. Assembly device (10) according to the preceding claim, **characterized in that,** said means (14) for projecting the laser beam (F) being provided with a projection cone (24), said air input means (22) is linked to said projection cone (19), which acts as a cone for channeling the air stream (A), so as to obtain a controlled air stream (A) on the top surface of said top part (11).

8. Method for assembling two parts by laser transmission welding, a first transparent top part (11) being positioned on a second absorbing bottom part (12), the two parts (11, 12) being positioned on a support (13) for the laser welding and assembled together on the support (13) by means of an assembly device (10) according to any one of the preceding claims,
the method comprising at least:
- a first step of geometrical referencing of the assembly of the two parts (11, 12) positioned on said support (13) by first upper clamping means (15), that is to say capable of coming to bear against the top surface of the top part (11),
- a second step of conformation of the assembly of the two parts (11, 12) positioned on the support (13) by second lower clamping means (19), that is to say capable of coming to bear against the bottom surface of the bottom part (12), associated with first adjustment means (20), so as to adjust a predetermined force (f2) exerted by said second clamping means (19) against the assembly of the two parts (11, 12) positioned on said support (13),
- a third step of laser transmission welding via a means (14) for projecting a laser beam (F) at a predetermined welding interface (17) of the two parts (11, 12),
in which **assembly method**
said first adjustment means (20) comprise a plurality of movable members (21),
the second step of conformation comprises a step of actuating the movable members (21) independently of one another, so as to adjust said predetermined force (f2) at said welding interface (17),
in the first step of geometrical referencing, a plurality of articulated clamps (16) are placed, bearing against the top surface of the top part (11), all along the welding interface (17) of the two parts (11, 12) so as to follow the form of the assembly at said welding interface (17).

9. Assembly method according to the preceding claim, **characterized in that** it comprises, simultaneously with said third laser welding step, a step of projecting a controlled air stream (A) onto the top surface of said top part (11).
